# EUROPÄISCHE PATENTANMELDUNG

(11) **EP 0 609 704 A2**
(43) Veröffentlichungstag der Anmeldung: **10.08.1994**
(21) Anmeldenummer: 94100740.3
(22) Anmeldetag: 19.01.1994
(51) Int. Cl.: G06F 9/46, G06F 13/26

(54) **Einrichtung zur Interruptsteuerung**

(30) Priorität: 01.02.1993 DE 9301336 U
(71) Anmelder: SIEMENS AKTIENGESELLSCHAFT, D-80333 München (DE)
(72) Erfinder: Wolfschmitt, Willy, Dipl.-Ing. (FH), D-97483 Eltmann (DE)

(57) **Zusammenfassung**

Damit bei Unterbrechungen eines Programms durch Interrupts (I,IA,IB,IC) das Programm problemlos nach Interruptende fortgeführt werden kann, ohne daß dazu eine umfangreiche Adreßverwaltung über das Betriebssystem erfolgen muß, werden NMI-Interrupts in höchstpriore normale Interrupts (I) umgesetzt.

## Beschreibung

Die Erfindung bezieht sich auf eine Einrichtung zur Interruptsteuerung bei einem von einem Netzteil gespeisten, u.a. mit Arbeitsspeicher und Stackregistern ausgestatteten Computersystem, insbesondere bei einer numerischen Steuerung für Werkzeugmaschinen oder Roboter.

Bei Computersystemen ist erforderlich, mit Hilfe einer Interruptsteuerung das Prozeßgeschehen zu beeinflussen. Die Interrupts sind dabei hinsichtlich ihrer Priorität unterschieden. Höchstprior ist dabei der sogenannte nicht maskierte Interrupt auch NMI-Interrupt genannt. Ein derartiger NMI-Interrupt setzt sich stets unverzögert durch. Dem NMI-Interrupt sind die weiteren Interrupts untergeordnet, die untereinander noch hinsichtlich ihrer Priorität gestaffelt sind. Bei den normalen Interrupts wird ferner dahingehend unterschieden, ob es sich um unterbrechbare oder nicht unterbrechbare Interrupts handelt. Bei nicht unterbrechbaren Interrupts müssen diese stets erst vollständig abgearbeitet sein, bevor ein weiterer normaler Interrupt zum Zuge kommen kann. Bei unterbrechbaren Interrupts ist dies nicht der Fall.

Damit können verschiedenen Zuständen im Prozeßgeschehen verschiedene Prioritäten zugeordnet werden. Ganz oben in der Prioritätsliste wäre ein Spannungsausfall, beispielsweise wegen eines Netzausfalls anzusetzen, da ein solcher die Gefahr eines Datenverlustes nach sich zieht, wenn nicht unverzüglich Rettroutinen vorgenommen werden.

Es möge nun zur Problemschilderung angenommen sein, daß ausgehend von einer unterbrochenen Aufgabe (Task) gerade ein an sich nicht unterbrechbarer normaler Interrupt gestartet worden ist. Dieser Interrupt würde dabei auf den im regulären Betrieb vorliegenden Zeiger des Stackregisters aufsetzen und würde nach Interruptende zu diesem zurückkehren. Damit wäre die unterbrochene Task nach Abschluß des Interrupts fortsetzbar. Wenn nun jedoch ein NMI-Interrupt den durch normale Interrupts nicht unterbrechbaren Interrupt unterbrechen würde, würde eine solche Rückführung des Stackregisterzeigers nicht mehr möglich sein. Damit wäre die gesamte Datenverarbeitung gestört. Um dies zu vermeiden, müßte beim Starten jedes Interrupts sei es ein unterbrechbarer oder ein nicht unterbrechbarer, die jeweilige Position des Zeigers des Stackregisters registriert werden, bei dem die jeweilige Task verlassen worden ist. Derartige häufige Registriervorgänge würden jedoch das Betriebssystem stark belasten.

Aufgabe der Erfindung ist es, eine Einrichtung der eingangs genannten Art so zu gestalten, daß die Sicherheit der Datenverarbeitung stets gewährleistet ist und der Betrieb nicht durch unnötige Registriervorgänge belastet wird.

Gemäß der Erfindung wird diese Aufgabe dadurch gelöst, daß Datenrettsignale, die beispielsweise bei Netzausfall einer Reset-Taster-Betätigung, Steuerungs- oder Betriebsmodewechsel auslösbar sind, zwar als nicht maskierte Interrupts einer Zentraleinheit des Systems gemeldet werden, dort jedoch zunächst noch keine sofortige Prozeßunterbrechung auslösen, sondern erst in einen Anforderungsbefehl für einen nicht unterbrechbaren Interrupt höchster Priorität gewandelt werden, der ebenso wie alle weiteren Anforderungsbefehle für Interrupts von demgegenüber niedrigerer Priorität an einen Interruptcontroller geleitet wird, der dann die Interrupts je nach ihrer Priorität an die Zentraleinheit des Systems weiterleitet, wo sie dann zum Tragen kommen. Damit ist zwar sichergestellt, daß es zwar in der Zentraleinheit erkennbar ist, daß ein nicht maskierter Interrupt ausgelöst worden ist, jedoch wird der eigentliche Interruptvorgang dann so behandelt, als wenn es sich beim nicht maskierten Interrupt um ein Interrupt höchster Priorität handeln würde. Damit werden übliche, nicht unterbrechbare Interrupts durch den abgeleiteten Interrupt höchster Priorität nicht sofort beendet und die richtige Rücksprungadresse des Stackregisters wird zur Aufnahme des Task-Betriebs wieder erreicht.

Eine erste Ausbildung der Erfindung ist dadurch gekennzeichnet, daß die Datenrettsignale über ein Command-Status-Register an die Zentraleinheit geleitet werden. Mit diesem Command-Status-Register kann beispielsweise jedem nicht maskierten Interrupt eine zusätzliche Information beigeordnet werden, welcher Vorgang für ihn auslösend war.

Eine weitere Ausbildung der Erfindung ist dadurch gekennzeichnet, daß dann, wenn es sich bei Interrupts von nicht höchster Priorität um unterbrechbare Interrupts handelt, mit deren Start auch die jeweilige Adresse des Stackregisterzeigers so abgelegt wird, daß über das Betriebssystem wieder auf diese zugegriffen werden kann, falls tatsächlich eine Unterbrechung des unterbrechbaren Interrupts vorgenommen wird. Im Betrieb hat es sich nämlich gezeigt, daß in Sonderfällen auch normale unterbrechbare Interrupts erforderlich sein könnten. Für diese wenigen Ausnahmefälle muß dann allerdings auch die jeweilige zurückführende Adresse des Stackregisters verwaltet werden. Da beim Gesamtsystem jedoch ganz überwiegend nicht unterbrechbaren Interrupts auftreten, wird auch in diesem Fall durch die Erfindung eine erhebliche Entlastung des Betriebssystem gewährleistet.

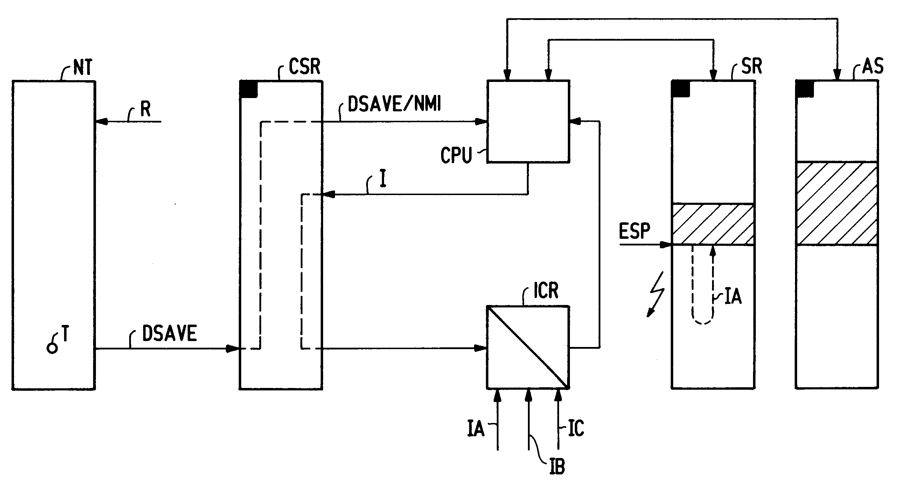

Ein Ausführungsbeispiel der Erfindung ist in der Zeichnung dargestellt und wird im folgenden näher erläutert.

In der Darstellung ist eine Zentraleinheit CPU eines Rechnersystems gezeigt, die ebenso, wie die weiteren Elemente des Systems von einem Netzteil NT mittels der Übersichtlichkeit halber nicht gezeigten Leitungen gespeist wird. Die Zentraleinheit CPU steht im bidirektionalen Datenaustausch mit einem Arbeitspeicher AS und einem Stackregister SR. Eingabe- und Ausgabebaugruppen, über die Ein- und Ausgabebefehle geleitet werden können, sind deshalb nicht dargestellt, weil sie zum Wesen der eigentlichen Erfindung nicht beitragen. Allerdings ist durch Pfeile angedeutet, daß Interruptwünsche IA, IB und IC aus dem Prozeßgeschehen an einen Interruptcontroller ICR gelangen können und ferner ist durch einen Pfeil R veranschaulicht, daß eine Reset-Anforderung über das Netzteil NT in das System gegeben werden kann. Der Interruptcontroller ICR leitet die jeweils höchstpriore Interruptanforderung an die Zentraleinheit CPU weiter.

An dieser Stelle sei auch darauf hingewiesen, daß das Netzteil NT auch eine Reset-Taste T aufweisen kann.

Wenn nun entweder eine Reset-Anforderung von der Software vorliegt, wie dies über den Pfeil R angedeutet ist, oder wenn die Reset-Taste T betätigt sein sollte oder wenn ein Netzausfall oder eine Steuerungsmodeänderung vorliegen sollte, wird durch das Netzteil NT eine diesbezügliche Meldung als ein DSAVE-Signal abgegeben. Der Begriff DSAVE soll dabei darauf hinweisen, daß eine Datenrettung vorzunehmen ist. Das diesbezügliche Signal DSAVE gelangt an ein Command-Status-Register CSR. Wie über gestrichelte Linien angedeutet, wird dort dem DSAVE-Signal ein nicht maskierter Interrupt NMI zugeordnet. Ein diesbezügliches Ausgangssignal des Command-Status-Registers CSR wird dann der Zentraleinheit CPU zugeleitet, die damit über das Vorliegen dieses kritischen Systemzustands informiert ist und die Zentraleinheit CPU liefert eine Interruptanforderung I höchster Priorität an den Interruptcontroller ICR, wobei diese Anforderung ebenfalls über das Command-Status-Register CSR geleitet werden kann.

Für die Erläutertung des Prozeßgeschehens sei zunächst angenommen, daß es sich bei den normalen Interruptbefehlen IA, IB und IC um nicht unterbrechbare Interrupts handeln möge. Wenn nun eine Bearbeitungsaufgabe, eine sogenannte Task (schraffiert angedeutet) aufgrund des Interrupts IA unterbrochen sein sollte, wie dies durch den Zeiger ESP beim Stackregister SR gezeigt ist, würde dieser Interrupt IA, wie durch einen gebogenen gestrichelten Pfeil angedeutet ist, nach seiner ordnungsgemäßen Beendigung wieder auf den Einsprungort ESP zurückführen, von wo aus die unterbrochene Bearbeitungsaufgabe dann fortgeführt werden könnte. Wenn nun, wie durch einen Blitz angedeutet, ein nicht maskierter Interrupt NMI während des Ablaufs des Interrupts IA direkt die zentraleinheit CPU beeinflussend ausgelöst werden könnte, wäre die ordnungsgemäße Rückführung auf den Einsprungort ESP nicht mehr möglich. Nun ist jedoch ein solches Einwirken des nicht maskierten Interrupts NMI gemäß der Erfindung nicht mehr möglich, d.h. der Interrupt IA würde ordnungsgemäß zu Ende geführt und wieder auf den Aufsetzpunkt im Stackregister SR gebracht. Ein dabei erfindungsgemäß ausgelöster höchstpriorer Interrupt aufgrund des Signals DSAVE kann den Interrupt IA jedoch nicht unterbrechen, so daß eine sichere Rückführung zur unterbrochenen Task erreicht wird.

Wenn es sich allerdings bei den Interrupts IA, IB und IC auch um unterbrechbare Interrupts handeln könnte, müßte sichergestellt werden, daß dann, wenn ein unterbrechbarer Interrupt gestartet wird, die Stellung des Zeigers ESP des Stackregisters SR über das Betriebssystem registriert wird. Hierbei handelt es sich jedoch um einen Sonderfall, der dementsprechend selten auftreten dürfte.

## Patentansprüche

1. Einrichtung zur Interruptsteuerung bei einem von einem Netzteil gespeisten, unter anderem mit Arbeitspeicher und Stackregistern ausgestatteten Computersystem, insbesondere bei einer numerischen Steuerung für Werkzeugmaschinen oder Roboter, **dadurch gekennzeichnet,** daß Datenrettsignale (DSAVE), die beispielsweise bei Netzausfall, einer Reset-Taster-Betätigung, Steuerungs- oder Betriebsmodewechsel auslösbar sind, zwar als nicht maskierte Interrupts (NMI) einer Zentraleinheit (CPU) des Systems gemeldet werden, dort jedoch zunächst noch keine sofortige Prozeßunterbrechung auslösen, sondern erst in einen Anforderungsbefehl (I) für einen nicht unterbrechbaren Interrupt höchster Priorität gewandelt werden, der ebenso wie alle weiteren Anforderungsbefehle für Interrupts (IA,IB,IC) von demgegenüber niedrigeren Priorität an einen Interruptcontroller (ICR) geleitet wird, der dann die Interrupts je nach ihrer Priorität an die Zentraleinheit (CPU) des Systems weiterleitet, wo sie dann zum Tragen kommen.

2. Einrichtung nach Anspruch 1, **dadurch gekennzeichnet,** daß die Datenrettsignale über ein Command-Status-Register (CSR) an die Zentraleinheit (CPU) geleitet werden.

3. Einrichtung nach Anspruch 1 oder 2, **dadurch gekennzeichnet,** daß dann, wenn es sich bei Interrupts von nicht höchster Priorität (IA,IB,IC) um unterbrechbare Interrupts handelt, mit deren Start auch die jeweilige Adresse des Stackregisterzeigers (ESP) so abgelegt wird, daß über das Betriebssystem wieder auf diese zugegriffen werden kann, falls tatsächlich eine Unterbrechung des unterbrechbaren Interrupts vorgenommen wird.
